# EUROPÄISCHE PATENTSCHRIFT

(11) **EP 1 316 748 B1**
(45) Veröffentlichungstag und Bekanntmachung des Hinweises auf die Patenterteilung: **19.09.2007**
(21) Anmeldenummer: 02025679.8
(22) Anmeldetag: 20.11.2002
(51) Int. Cl.: F16K 27/00, F16K 47/02, F15B 13/00

(54) **Ventileinheit mit einem geräuscharmen Entlüftungskanal**
Valve unit with silent venting channel
Dispositif de vanne avec un conduit d'aération silencieux

(30) Priorität: 03.12.2001 DE 10159182
(43) Veröffentlichungstag der Anmeldung: 04.06.2003
(73) Patentinhaber: Bosch Rexroth Teknik AB, 125 81 Stockholm (SE)
(72) Erfinder: Rothberg, Joakim, 141 50 Huddinge (SE)
(74) Vertreter: Maiwald Patentanwalts GmbH

(56) Entgegenhaltungen:
- EP-A- 0 648 940
- EP-A- 0 926 353
- DE-U- 29 912 547
- US-A- 3 195 572

## Beschreibung

Die Erfindung betrifft eine Ventileinheit mit mehreren Mehrwegeventilen, welche zur Druckmittelversorgung mit einer Fluidverteiler-Anordnung in Verbindung stehen, wobei die Fluidverteiler-Anordnung zumindest einen Speisedruckkanal und zumindest einen Entlüftungskanal umfasst, welche längs durch die Fluidverteiler-Anordnung verlaufen und mittels Querkanälen mit den Mehrwegeventilen in Verbindung stehen, um eine Druckmittelverbindung zwischen den Mehrwegeventilen und den Kanälen zu schaffen. Insbesondere betrifft die vorliegende Erfindung die Querschnittsgestaltung des besagten Entlüftungskanals.

Eine Ventileinheit gemäß dem Oberbegriff des Anspruchs 1 ist aus dem Katalog "Know-how in Pneumatics" (Nr. 0001000601, vom 1. September 1998, Seite 5.122 f) bekannt. Die bekannte Ventileinheit umfasst eine Fluidverteiler-Anordnung, welche zum Anschluss von 5/2-, 5/3- oder 2x3/2-Ventilen mit einer oberen Montagefläche ausgestattet ist. An der Montagefläche der Fluidverteiler-Anordung und an einer korrespondierenden Fläche der Mehrwegeventile sind Druckmittelöffnungen zur Druckmittelversorgung und Entlüftung der Mehrwegeventile vorgesehen. Weiterführende Druckmittelkanäle verlaufen in Längsrichtung durch die Fluidverteiler-Anordnung und münden in entsprechende Druckmittelanschlüsse an einer Frontseite der Fluidverteiler-Anordnung aus, um die Fluidverteiler-Anordnung mit entsprechenden Druckmittelleitungen zu verbinden. Die Fluidverteiler-Anordnung besitzt konkret einen zentralen Speisedruckkanal und zwei Entlüftungskanäle, welche beidseits des zentralen Speisedruckkanals angeordnet sind. Entsprechende Querkanäle verlaufen von diesen Kanälen ausgehend zur Montagefläche der Fluidverteiler-Anordnung, um eine Druckmittelverbindung zu den Mehrwegeventilen zu schaffen. Zusätzlich zu diesen Querkanälen sind zwei parallel hierzu verlaufende Arbeitskanäle vorgesehen, die an der Unterseite der Fluidverteiler-Anordnung ausmünden, um einen Anschluss von Druckmittelaggregaten - beispielsweise einen Druckmittelzylinder - zu gewährleisten. Die Fluidverteiler-Anordnung ist aus mehreren aneinandergereihten Fluidverteilerelementen zusammengesetzt, wobei jedes Fluidverteilerelement einem Mehrwegeventil zugeordnet ist, welches hieran über eine Schraubverbindung befestigt ist.

Der Druckmittelversorungskanal und die beiden Entlüftungskanäle der Fluidverteiler-Anordnung besitzen einen durch Bohren hergestellten kreisförmigen Querschnitt. Insbesondere der kreisförmige Querschnitt der Entlüftungskanäle steht einem ungehinderten Druckmittelfluss ausgehend vom Mehrwegeventil durch die Fluidverteiler-Anordnung hindurch entgegen, da sich bei der Entlüftung hierin ein gewisser Gegendruck aufbaut.

Darüber hinaus verursacht der begrenzte kreisförmige Querschnitt der Entlüftungskanäle ein relativ hohes Entlüftungsgeräusch.

Eine Ventileinheit gemäß dem Oberbegriff des Anspruchs 1 ist ebenso durch die EP-A1-0648940 bekannt geworden.

Es ist die Aufgabe der vorliegenden Erfindung eine Ventileinheit zu schaffen, die im Gegensatz zum Stand der Technik einen höheren Durchfluss bei der Entlüftung ermöglicht und gleichzeitig das Entlüftungsgeräusch minimiert.

Die Aufgabe wird ausgehend von einer Ventileinheit mit den Merkmalen des Oberbegriffs, Anspruch 1 in Verbindung mit dessen kennzeichnenden Merkmalen gelöst. Die nachfolgenden Ansprüche geben vorteilhafte Weiterbildungen der Erfindung wieder.

Die Erfindung schließt die technische Lehre ein, dass eine Fluidverteiler-Anordnung mit einem Entlüftungskanal ausgestattet ist, der von einer der äußeren Querschnittsform der Fluidverteiler-Anordnung zumindest teilweise folgenden, dünnen Wandbereich umgeben ist, um den Querschnitt des Entlüftungskanals zu maximieren, wobei zumindest ein Arbeitskanal vorgesehen ist, welcher quer durch den Entlüftungskanal hindurch verläuft, um entsprechende Arbeitsanschlüsse an der Außenfläche der Fluidverteiler-Anordnung zu bilden.

Somit gelangt die Abluft ungehinderter und damit geräuscharm durch den Entlüftungskanal hindurch. Der Querschnitt des erfindungsgemäß ausgebildeten Entlüftungskanals ist durch eine Reduzierung des Materials, welches zur Bildung der verbleibenden Kanäle der Fluidverteiler-Anordnung erforderlich ist, maximiert.

Vorzugsweise ist für jedes Mehrwegeventil der Ventileinheit ein eigenes Fluidverteilerelement vorgesehen, wobei die Breite des Fluidverteilerelements an die Breite des Mehrwegeventils angepasst ist. Dieses Merkmal erlaubt eine flexible Herstellung von Ventileinheiten mit einer unterschiedlichen Anzahl von Mehrwegeventilen durch eine einfach Aneinanderreihung der entsprechenden Anzahl von den erfindungsgemäß ausgebildeten Fluidverteilerelementen. Daneben ist es auch denkbar, alle Mehrwegeventile einer Ventileinheit an einer einstückig ausgebildeten Fluidverteiler-Anordnung anzuschließen.

Gemäß einer weiteren die Erfindung verbessernden Maßnahme wird vorgesehen, dass beide Frontseiten der Fluidverteiler-Anordnung durch jeweilige Enddeckel verschlossen sind, welche Druckmittelanschlüsse zur Druckmittelversorgung und/oder Entlüftung der entsprechenden Kanäle bzw. ein Dämpfungselement tragen. Es ist ebenfalls möglich, ein Dämpfungselement direkt innerhalb des großflächigen Entlüftungskanals platzsparend zu integrieren. Durch die Großflächigkeit des Entlüftungskanals ist die Lage des Entlüftungsanschlusses oder eines Dämpfungselements nicht durch den schmalen Mündungsbereich eines Entlüftungskanals festgelegt, wie bei Fluidverteiler-Anordnungen des Standes der Technik.

Nach einer anderen die Erfindung verbessernden Maßnahme ist mindestens ein Speidesdruckkanal im Zentralbereich des Querschnitts des Fluidverteilerelements platziert, um das Hauptventilteil des Mehrwegeventils zentral mit Druckmittel zu versorgen. Der zentrale Speisedruckkanal besitzt vorzugsweise eine röhrenartige Gestalt mit einem dünnen Wandbereich. Zusätzlich können weitere Steuerdruckversorgungskanäle beidseits des zentralen Speisedruckkanals angeordnet sein, um eine separate Druckmittelversorgung zu korrespondierenden, dem Mehrwegeventil zugeordneten Pilotventilen zu schaffen. Es ist ebenfalls möglich, die Fluidverteiler-Anordnung mit nur einem separaten Speisedruckkanal auszustatten. Ferner ist es denkbar, die Versorgung des zumindest einen Pilotventils des Mehrwegeventils über den zentralen Speisedruckkanal des Hauptventils vorzunehmen. Falls das Mehrwegeventil der Ventileinheit nicht durch ein Pilotventil angesteuert wird, dann kann auf separate Steuerdruckversorgungskanäle auch gänzlich verzichtet werden.

Um eine Anordnung von Druckmittelanschlüssen für Druckmittelleitungen am Mehrwegeventil zu vermeiden, ist erfindungsgemäß zumindest ein Arbeitskanal vorgesehen, welcher den großflächigen Entlüftungskanal durchquert. Der zumindest eine Arbeitskanal mündet in einen zugeordneten Arbeitsanschluss, welcher vorzugsweise an der Unterseite oder an einer der Flankenseiten des Fluidverteilerelements platziert ist. Die Breite des Arbeitskanals sollte schmaler als die Breite des Fluidverteilerelements sein, damit dieser frei von der Abluft umströmt werden kann.

Gemäß einer anderen die Erfindung verbessernden Maßnahme ist zu beiden Seiten des zentralen Speisedruckkanals je eine Durchgangsbohrung zur Aufnahme von Schraubenelementen angeordnet. Beide Schraubenelemente sind zur Aneinanderbefestigung der einzelnen Fluidverteilerelemente vorgesehen. Die Durchgangsbohrungen sind vorzugsweise benachbart zu den Steuerdruckversorgungskanälen - falls vorhanden - und parallel zu dem Entlüftungskanal innerhalb eines gemeinsamen Wandbereichs vorgesehen. Weiterhin kann auch ein Elektronikkanal benachbart und parallel zum Entlüftungskanal vorgesehen werden, um hierin elektrische Kabel und/oder elektronische Bauteile zur Ansteuerung der Mehrwegeventile unterzubringen.

Vorzugsweise ist ein einstückiges elastisches Dichtungselement zwischen der Montagefläche der Fluidverteiler-Anordnung und der korrespondierenden Montagefläche des zugeordneten Mehrwegeventils vorgesehen. Weiterhin kann ein einstückiges Dichtungselement auch zwischen benachbarten Fluidverteilerelementen platziert werden, um die Kanäle gegeneinander und gegenüber der Atmosphäre abzudichten. Die einzelnen Fluidverteilerelemente können aus stranggepresstem Aluminium, aus spritzgegossenem Kunststoff oder aus einem anderen geeigneten Material bestehen.

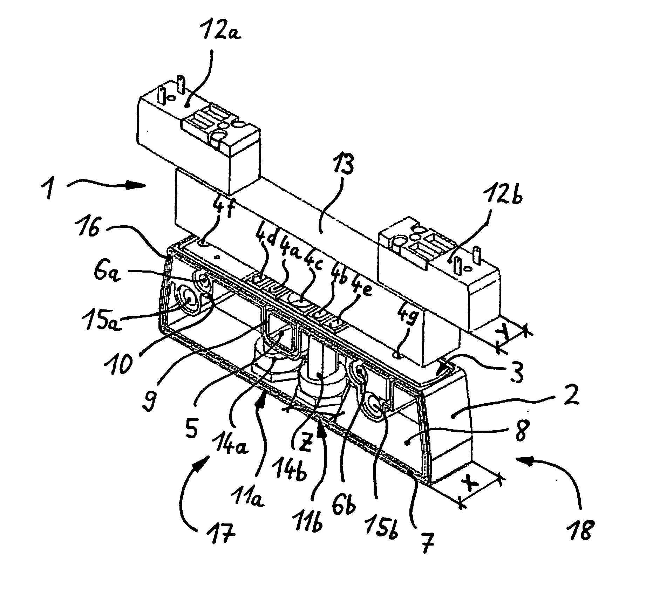

Weitere die Erfindung verbessernde Maßnahmen werden nachstehend gemeinsam mit der Beschreibung eines bevorzugten Ausführungsbeispiels der Erfindung anhand der einzigen Figur näher dargestellt.

Die Figur zeigt eine perspektivische Ansicht eines einzelnen, einen erfindungsgemäß ausgebildeten Entlüftungskanal aufweisenden Fluidverteilerelements mit einem hiermit zusammenwirkenden 5/3-Mehrwegeventil.

Die hieraus aufgebaute Ventileinheit besteht aus mehreren Mehrwegeventilen 1 gemäß der Figur welche mit einem zugeordneten Fluidverteilerelement 2 in Verbindung steht. Die Breite X des Fluidverteilerelements 2 ist an die Breite Y des Mehrwegeventils 1 angepasst. Mehrere Fluidverteilerelemente 2 sind zur Bildung der Fluidverteiler-Anordnung der Ventileinheit aneinandergereiht. An einer Montagefläche 3 eines jeden Fluidverteilerelements 2 sind mehrere Öffnungen 4a bis 4g vorgesehen, welche gegenüberliegend zu (nicht erkennbaren) Öffnungen an einer korrespondierenden Montagefläche des Mehrwegeventils 1 angeordnet sind, um eine Druckmittelverbindung zwischen dem Fluidverteilerelement 2 und dem Mehrwegeventil 1 zu schaffen.

Das Fluidverteilerelement 2 besitzt einen Speisedruckkanal 5, der im zentralen Bereich des Fluidverteilerelements 2 angeordnet ist. Zu beiden Seiten des zentralen Speisedruckkanals 5 sind separate Steuerdruckversorgungskanäle 6a und 6b vorgesehen. Ein äußerer dünner Wandbereich 7 des Fluidverteilerelements 2 bildet im wesentlichen die Begrenzung des großflächigen Entlüftungskanals 8. Der Speisedruckkanal 5 und die beiden separaten Steuerdruckversorgungskanäle 6a und 6b sind ebenfalls von einem im wesentlichen dünnwandigen Wandbereich 9 bzw. 10 umgeben. Der zentrale Speisedruckkanal 5, der Entlüftungskanal 8 und beide Steuerdruckversorgungskanäle 6a und 6b verlaufen in Längsrichtung durch die gesamte Fluidverteiler-Anordnung hindurch. Weiterhin verlaufen zwei Arbeitskanäle 14a und 14b ausgehend von den Öffnungen 4a und 4b an der Montagefläche 3 zur Unterseite 17 des Fluidverteilerelements 2, welche den Entlüftungskanal 8 dabei durchqueren, um Arbeitsanschlüsse 11 a bzw. 11 b zum Anschluss des Mehrwegeventils 1 an ein (nicht gezeigtes) Druckmittelaggregat, beispielsweise einen Druckmittelzylinder, zu schaffen. Die Breite Z der Arbeitskanäle 14a und 14b ist hierbei schmaler als die Breite X des Fluidverteilerelements 2. Der zentrale Speisedruckkanal 5 korrespondiert mit der Öffnung 4c an der Montagefläche 3, der Entlüftungskanal 8 steht mit den Öffnungen 4d und 4e in Verbindung. Die Steuerdruckversorgungskanäle 6a und 6b korrespondieren mit den Öffnungen 4f bzw. 4g über entsprechende Querkanäle.

Weiterhin sind Durchgangsbohrungen 15a und 15b für (nicht gezeigte) Schraubenelemente vorgesehen, die je benachbart zu den Steuerdruckversorgungskanälen 6a und 6b verlaufen, um die einzelnen Fluidverteilerelemente 2 zur Bildung der Fluidverteiler-Anordnung aneinander zu befestigen. Zwischen benachbarten Fluidverteilerelementen 2 ist je ein einstückiges Dichtungselement 16 vorgesehen.

Das pneumatische Mehrwegeventil 1 dieses Ausführungsbeispiels führt eine 5/3-Ventilfunktion aus. Zwei elektrisch ansteuerbare Pilotventile 12a und 12b sind auf einem Hauptventilteil 3 montiert, um einen (hier nicht erkennbaren) innenliegenden Ventilschieber in die gewünschte Richtung zu bewegen. Die beiden Pilotventile 12a und 12b stehen mit den jeweils zugeordneten Steuerdruckversorgungskanälen 6a und 6b in Verbindung. Abhängig von der Position des innenliegenden Ventilschiebers fließt Druckluft ausgehend vom zentralen Speisedruckkanal 5 zu den Arbeitsanschlüssen 11a bzw. 11b oder - in die andere Richtung - ausgehend von den beiden Arbeitsanschlüssen 11a und 11b zu dem gemeinsamen Entlüftungskanal 8 über das Hauptventilteil 13 des Mehrwegeventils 1.

Die vorliegende Erfindung ist nicht beschränkt auf das vorstehend beschriebene bevorzugte Ausführungsbeispiel. Es sind auch Abwandlungen hiervon denkbar, die vom Schutzbereich der Ansprüche Gebrauch machen. Insbesondere ist die vorliegende Erfindung nicht beschränkt auf die Anordnung des zentralen Druckmittelversorgungskanals, wie vorstehend beschrieben. Weiterhin kann es in speziellen Anwendungsfällen durchaus nützlich sein, parallel neben dem Entlüftungskanal einen sogenannten Elektronikkanal auszuformen, in dem elektrische Kabel und/oder elektronische Komponenten zur Ansteuerung der Mehrwegeventile untergebracht sind.

### Bezugszeichenliste

- **1**: Mehrwegeventil
- **2**: Fluidverteilerelement
- **3**: Montagefläche
- **4**: Öffnung
- **5**: Speisedruckkanal
- **6**: Steuerdruckversorgungskanal
- **7**: dünner Wandbereich
- **8**: Entlüftungskanal
- **9**: dünner Wandbereich
- **10**: dünner Wandbereich
- **11**: Arbeitsanschluss
- **12**: Pilotventil
- **13**: Hauptventilteil
- **14**: Arbeitskanal
- **15**: Durchgangsbohrung
- **16**: Dichtungselement
- **17**: Unterseite
- **18**: Flankenseite

## Patentansprüche

1. Ventileinheit mit mehreren Mehrwegeventilen (1), die mit einer Fluidverteiler-Anordnung zur Druckmittelversorgung der Mehrwegeventile (1) in Verbindung stehen, wobei die Fluidverteiler-Anordnung zumindest einen Speisedruckkanal (5) und zumindest einen Entlüftungskanal (8) umfasst, die in Längsrichtung durch die Fluidverteiler-Anordnung verlaufen und mit den Mehrwegeventilen (I) über Querkanäle in Verbindung stehen, um eine Druckmittelverbindung zwischen Mehrwegeventilen (1) und dem Speisedruckkanal (5) sowie dem Entlüftungskanal (8) zu schaffen, wobei der Entlüftungskanal (8) von einem dem Außenquerschnitt der Fluidverteiler-Anordnung zumindest teilweise folgenden, dünnen Wandbereich (7) umgeben ist, wobei zumindest ein Arbeitskanal (14a, 14b) in Querrichtung durch den Entlüftungskanal (8) hindurch verläuft, um einen korrespondierenden Arbeitsanschluss (11a, 11b) außen an der Fluidverteiler-Anordnung zu schaffen,
**dadurch gekennzeichnet, daß** der dünne Wandbereich (7) ebenfalls teilweise den Speisedruckkanal (5) umgibt, um den Querschnitt des Entlüftungskanals (8) zu maximieren und daß der Arbeitskanal (14a, 14b) durch den Entlüftungskanal (8) gerade hindurch verläuft und von der Unterseite (17), der Ventileinheit ausgeht.

2. Ventileinheit nach Anspruch 1,
**dadurch gekennzeichnet, dass** der Entlüftungskanal (8) vollständig von dem dünnen Wandbereich (7) umgeben ist, der die Begrenzung des Entlüftungskanals (8) bildet.

3. Ventileinheit nach Anspruch 1 oder 2,
**dadurch gekennzeichnet, dass** die übrigen Kanäle (5, 6) ebenfalls jeweils von einem eigenen dünnen Wandbereich (9, 10) umgeben sind und innerhalb sowie parallel zum Entlüftungskanal (8) verlaufen.

4. Ventileinheit nach Anspruch 1,
**dadurch gekennzeichnet, dass** jedes Mehrwegeventil (1) mit einem eigenen Fluidverteilerelement (2) in Verbindung steht, wobei die Breite (X) des Fluidverteilerelements (2) an die Breite (Y) des korrespondierenden Mehrwegeventils (I) angepasst ist.

5. Mehrwegeventil nach Anspruch 1,
**dadurch gekennzeichnet, dass** die Breite (Z) des zumindest einen Arbeitskanals (14a, 14b) schmaler als die Breite (X) des Fluidverteilerelements (2) ist.

6. Ventileinheit nach Anspruch 4,
**dadurch gekennzeichnet, dass** zwischen benachbarten Fluidverteilerelementen (2) ein einstückiges Dichtungselement (16) angeordnet ist, um die Kanäle (5, 6, 8) gegeneinander und gegen die Atmosphäre abzudichten.

7. Ventileinheit nach einem der vorstehenden Ansprüche,
**dadurch gekennzeichnet, dass** beide Frontseiten der Fluidverteiler-Anordnung durch je eine Endplatte verschlossen ist, an welcher Druckmittelanschlüsse zur Druckmittelversorgung der Kanäle (5,6) und/oder ein Schalldämpferelement angeordnet ist.

8. Ventileinheit nach einem der vorstehenden Ansprüche,
**dadurch gekennzeichnet, dass** zumindest ein Speisedruckkanal (5) im Zentralbereich des Querschnitts des Fluidverteilerelements (2) angeordnet ist.

9. Ventileinheit nach Anspruch 8,
**dadurch gekennzeichnet, dass** Steuerdruckversorgungskanäle (6a, 6b) zu beiden Seiten des zentralen Speisedruckkanals (5) angeordnet sind.

10. Ventileinheit nach einem der vorstehenden Ansprüche,
**dadurch gekennzeichnet, dass** benachbart zu den Steuerdruckversorgungskanälen (6a, 6b) jeweils eine Durchgangsbohrung (15a, 15b) zur Aufnahme von Schraubenelementen verläuft, um die einzelnen Fluidverteilerelemente (2) zur Bildung der Fluidverteiler-Anordnung aneinander zu befestigen.

11. Ventileinheit nach einem der vorstehenden Ansprüche,
**dadurch gekennzeichnet, dass** der mindestens eine Arbeitsanschluss (11a, 11b) an der Unterseite (17) oder an der Flankenseite (18) des Fluidverteilerelements (2) angeordnet ist.

12. Ventileinheit nach einem der vorstehenden Ansprüche,
**dadurch gekennzeichnet, dass** das Fluidverteilerelement (2) aus Kunststoff bestehend mittels Spritzgießen hergestellt ist oder aus Leichtmetall bestehend mittels Strangpressen hergestellt ist.

13. Ventileinheit nach einem der vorstehenden Ansprüche,
**dadurch gekennzeichnet, dass** benachbart neben dem Entlüftungskanal (8) und parallel hierzu verlaufend ein separater Elektronikkanal ausgebildet ist, der zur Aufnahme von elektrischen Kabeln und/oder elektronischen Komponenten zur Ansteuerung der Mehrwegeventile (1) dient.

14. Ventileinheit nach Anspruch 1,
**dadurch gekennzeichnet, dass** die Mehrwegeventile (1) mit einer einstückigen gemeinsamen Fluidverteiler-Anordnung in Verbindung stehen.

## Claims

1. A valve unit with a plurality of multiport valves (1) in communication with a fluid distribution assembly for supplying a pressurized medium to the multiport valves (1), wherein the fluid distribution assembly comprises at least one feeding pressure channel (5) and at least one vent channel (8) extending in a longitudinal direction through the fluid distribution assembly and in communication with the multiport valves (1) via transverse channels to create a pressurized-medium communication between said multiport valves (1) and said feeding pressure channel (5) and the vent channel (8), wherein the vent channel (8) is surrounded by a thin wall section (7) at least partially following the outer contour of the fluid distribution assembly, wherein at least one working channel (14a, 14b) extends through the vent channel (8) in a transverse direction in order to create a corresponding working port (11a, 11b) on the outside of the fluid distribution assembly,
**characterised in that** the thin wall section (7) also partially surrounds the feeding pressure channel (5) in order to maximise the cross-section of the vent channel (8), and **in that** the working channel (14a, 14b) extends in a straight line through the vent channel (8) and extends starting from the bottom side (17) of the valve unit.

2. The valve unit according to claim 1,
**characterised in that** the vent channel (8) is completely surrounded by the thin wall section (7), which forms the boundary of the vent channel (8).

3. The valve unit according to claim 1 or 2,
**characterised in that** the remaining channels (5, 6) are each also surrounded by a separate thin wall section (9, 10) and extend on the inside and parallel to the vent channel (8).

4. The valve unit according to claim 1,
**characterised in that** each multiport valve (1) is in communication with a separate fluid distribution element (2), wherein the width (X) of the fluid distribution element (2) is matched to the width (Y) of the corresponding multiport valve (1).

5. The valve unit according to claim 1,
**characterised in that** the width (Z) of the at least one working channel (14a, 14b) is less than the width (X) of the fluid distribution element (2).

6. The valve unit according to claim 4,
**characterised in that** a one-piece sealing element (16) is arranged between adjacent fluid distribution elements (2) in order to isolate the channels (5, 6, 8) with respect to each other and with respect to the ambient atmosphere.

7. The valve unit according to any one of the preceding claims,
**characterised in that** both front surfaces of the fluid distribution assembly are each closed off by an end plate, on which pressurized-medium ports are arranged for supplying pressurized medium to the channels (5, 6) and/or to a silencer element.

8. The valve unit according to any one of the preceding claims,
**characterised in that** at least one feeding pressure channel (5) is arranged in the central area of the cross-section of the fluid distribution element (2).

9. The valve unit according to claim 8,
**characterised in that** control pressure supply channels (6a, 6b) are arranged on either side of the central feeding pressure channel (5).

10. The valve unit according to any one of the preceding claims,
**characterised in that** a bored through hole (15a, 15b) extends adjacent to each control pressure supply channel (6a, 6b) to receive bolt elements in order to attach the individual fluid distribution elements (2) to each other to form a fluid distribution assembly.

11. The valve unit according to any one of the preceding claims,
**characterised in that** the at least one working port (11a, 11b) is arranged at the bottom surface (17) or at the side surface (18) of the fluid distribution element (2).

12. The valve unit according to any one of the preceding claims,
**characterised in that** the fluid distribution element (2) is manufactured of plastic material by means of injection moulding or is manufactured of light metal by means of extrusion.

13. The valve unit according to any one of the preceding claims,
**characterised in that** a separate electronics channel is formed adjacent to the vent channel (8) and in parallel to the latter to receive electric cables and/or electronic components for driving the multiport valves (1).

14. The valve unit according to claim 1,
**characterised in that** the multiport valves (1) are in communication with an integral common fluid distribution assembly.

## Revendications

1. Unité de vanne comportant plusieurs vannes à plusieurs voies (1) qui sont en communication avec un agencement de distribution de fluide pour l'alimentation en milieu sous pression des vannes à plusieurs voies, l'agencement de distribution de fluide comprenant au moins un canal de pression d'alimentation (5) et au moins un canal de mise à l'air (8) qui s'étendent en direction longitudinale à travers l'agencement de distribution de fluide et qui sont en communication avec les vannes à plusieurs voies (1) via des canaux transversaux pour créer une liaison de milieu sous pression entre des vannes à plusieurs voies (1) et le canal de pression d'alimentation (5) ainsi que le canal de mise à l'air (8), le canal de mise à l'air (8) étant entouré par une région de paroi (7) mince qui suit au moins partiellement la section transversale extérieure de l'agencement de distribution de fluide, au moins un canal de travail (14a, 14b) s'étendant en direction transversale à travers le canal de mise à l'air (8) pour créer un raccordement de travail (11a, 11b) correspondant à l'extérieur sur l'agencement de distribution de fluide,
**caractérisée en ce que** la région de paroi (7) mince entoure également partiellement le canal de pression d'alimentation (5) pour maximiser la section transversale du canal de mise à l'air (8), et **en ce que** le canal de travail (14a, 14b) s'étend de manière droite à travers le canal de mise à l'air (8) et sort par la face inférieure (17) de l'unité de vanne.

2. Unité de vanne selon la revendication 1,
**caractérisée en ce que** le canal de mise à l'air (8) est entièrement entouré par la région de paroi (7) mince qui forme la délimitation du canal de mise à l'air (8).

3. Unité de vanne selon la revendication 1 ou 2,
**caractérisée en ce que** les autres canaux (5, 6) sont également chacun entourés par une région de paroi (9, 10) mince et s'étendent à l'intérieur ainsi que parallèlement au canal de mise à l'air (8).

4. Unité de vanne selon la revendication 1,
**caractérisée en ce que** chaque vanne à plusieurs voies (1) est en communication avec un propre élément de répartition de fluide (2), la largeur (X) de l'élément de répartition de fluide (2) étant adaptée à la largeur (Y) de la vanne à plusieurs voies (1) correspondante.

5. Unité de vanne selon la revendication 1,
**caractérisée en ce que** la largeur (Z) dudit au moins un canal de travail (14a, 14b) est plus étroite que la largeur (X) de l'élément de distribution de fluide (2).

6. Unité de vanne selon la revendication 4,
**caractérisée en ce qu'**entre des éléments de distribution de fluide (2) voisins est agencé un élément d'étanchéité (16) d'un seul tenant pour étancher les canaux (5, 6, 8) les uns vis-à-vis des autres et vis-à-vis de l'atmosphère.

7. Unité de vanne selon la revendication 4,
**caractérisée en ce que** les deux faces frontales de l'agencement de distribution de fluide sont chacune fermées par une plaque d'extrémité sur laquelle sont agencés des raccordements de milieu sous pression pour alimenter les canaux (5, 6) en milieu sous pression et/ou un élément d'amortissement de bruit.

8. Unité de vanne selon l'une des revendications précédentes,
**caractérisée en ce qu'**au moins un canal de pression d'alimentation (5) est agencé dans la région centrale de la section transversale de l'élément de distribution de fluide (2).

9. Unité de vanne selon la revendication 8,
**caractérisée en ce que** les canaux d'alimentation en pression de commande (6a, 6b) sont agencés des deux côtés du canal de pression d'alimentation (5) central.

10. Unité de vanne selon l'une des revendications précédentes,
**caractérisée en ce qu'**au voisinage des canaux d'alimentation en pression de commande (6a, 6b) s'étend un perçage traversant (15a, 15b) respectif pour recevoir des éléments en forme de vis pour fixer les uns aux autres les éléments de distribution de fluide (2) individuels pour former l'agencement de distribution de fluide.

11. Unité de vanne selon l'une des revendications précédentes,
**caractérisée en ce que** ledit au moins un raccordement de travail (11a, 11 b) est agencé sur la face inférieure (17) ou sur la face de flanc (18) de l'élément de distribution de fluide (2).

12. Unité de vanne selon l'une des revendications précédentes,
**caractérisée en ce que** l'élément de distribution de fluide (2) est réalisé par moulage par injection, lorsqu'il est en matière plastique, ou par extrusion lorsqu'il est en métal léger.

13. Unité de vanne selon l'une des revendications précédentes,
**caractérisée en ce qu'**au voisinage à côté du canal de mise à l'air (8) et parallèlement à celui-ci est réalisé un canal électronique séparé qui sert à recevoir des câbles électrique et/ou des composants électroniques pour piloter les vannes à plusieurs voies (1).

14. Unité de vanne selon la revendication 1,
**caractérisée en ce que** les vannes à plusieurs voies (1) sont en communication avec un agencement de distribution de fluide commun réalisé d'un seul tenant.
